# EUROPÄISCHE PATENTSCHRIFT

(11) **EP 0 435 383 B1**
(45) Veröffentlichungstag und Bekanntmachung des Hinweises auf die Patenterteilung: **09.10.1996**
(21) Anmeldenummer: 90203350.5
(22) Anmeldetag: 17.12.1990
(51) Int. Cl.: H04J 3/07

(54) **Schaltungsanordnung zur Bitratenanpassung**
Circuit for bit adaptation
Circuit d'adaptation de débit binaire

(30) Priorität: 23.12.1989 DE 3942885
(43) Veröffentlichungstag der Anmeldung: 03.07.1991
(73) Patentinhaber: Philips Patentverwaltung GmbH, 22335 Hamburg (DE); Philips Electronics N.V., 5621 BA Eindhoven (NL)
(72) Erfinder: Urbansky, Ralph, Dr., W-8501 Schwaig 2 (DE)
(74) Vertreter: Peuckert, Hermann, Dipl.-Ing.

(56) Entgegenhaltungen:
- DE-A- 2 641 488
- NORTHERN TELECOM LIMITED : CONTRIBUTION TO T1 STANDARDS PROJECT - T1X1.4 17. Dez. 1986; Ottawa, CA ; Seiten 1 - 7 M. Betts : ' Effects of Pointer Manipulations on Network Wander Characteristics '

## Beschreibung

Die Erfindung bezieht sich auf eine Schaltungsanordnung zur Bitratenanpassung zweier Signale mit einem Pufferspeicher zur Einschreibung von Nutzdaten eines nach Rahmen strukturierten ersten Signals und zur Auslesung der Nutzdaten, mit einem Schreib- und Lesezähler zur Lieferung von Zählerständen als Schreibund Leseadressen und mit einem Vergleicher zum Vergleichen von Zählerständen dessen eines eine Regelabweichung eines Phasenregelkreises darstellendes Ausgangssignal zur Erzeugung eines Lesetaktes für den Lesezähler dient.

Eine derartige Schaltungsanordnung ist der europäischen Patentanmeldung EP-0 404 268 A2 zu entnehmen. Sie wird in der Nachrichtentechnik benötigt, um die in Rahmen eingeordneten Nutzdaten als plesiochrones Datensignal zurückzugewinnen. Es werden deshalb nur die Nutzdaten in den Pufferspeicher eingeschrieben, weil der Zähler bei allen anderen Daten des Signals angehalten wird und der Stand des Schreibzählers die Adressen angibt, unter denen Daten im elastischen Speicher abgelegt werden. Entsprechend gibt der Stand des Lesezählers die Adressen der Speicherstellen an, aus denen die Nutzdaten wieder ausgelesen werden.

Das Auslesen der Nutzdaten hat so zu erfolgen, daß die Abweichungen von der Sollbitrate des wiedergewonnenen plesiochronen Signals innerhalb der vorgeschriebenen Toleranzgrenzen bleiben. Eine Korrektur der Auslesegeschwindigkeit innerhalb dieser Toleranzgrenzen ist notwendig, um z.B. das Überlaufen des Pufferspeichers zu verhindern. Daher hat eine Überwachung der Stände der beiden Zähler zu erfolgen. Dieser Überwachung dient derVergleicher, durch den die Differenz der Zählerstände oder eine dazu äquivalente Größe gebildet wird. Wird das Ausgangssignal des Vergleichers als Regelabweichung für eine übliche Phasenregelschleife verwendet, mit der der Takt für den Lesezähler erzeugt wird, so hat das bei großen, sprunghaften Regelabweichungen den Nachteil, daß der Lesetakt und damit das plesiochrone Signal mit starkem Jitter behaftet sind.

Solche Regelabweichungen kommen z.B. vor, wenn die Nutzdaten in einem synchronen Transport-Modul-1 übertragen werden (näheres vergleiche weiter unten). Der Schreibzähler muß dann für mehrere Bytes angehalten werden; er läuft also sehr ungleichmäßig. Dieser ungleichmäßige Lauf spiegelt sich auch in der Regelabweichung mit den nachteiligen Folgen für das plesiochrone Signal wieder.

Aus dem Dokument NORTHERN TELECOM LIMITED: CONTRIBUTION TO T1 STANDARDS PROJECT T1X1.4, 17/12/86, Ottawa, CA, Seiten 1 bis 7, M. Betts: "Effects of Pointer Manipulations on Network Wander Characteristics" ist noch ein Desynchronisierer mit einem Pufferspeicher (buffer store) bekannt, dem ein Schreibtaktsignal (write clock) und ein Lesetaktsignal (read clock) zugeführt werden. Das Schreibtaktsignal wird über eine Steuerung (offset control) zu einem Phasendetektor geleitet, der einen Vergleich zwischen dem Ausgangssignal der Steuerung und dem Schreibtaktsignal durchführt. Der vom Phasendetektor gebildete Phasenfehler (phase error) wird einer Phasenregelschleife (phase locked loop) zugeführt, die das Lesetaktsignal erzeugt. Dem Schreibtaktsignal wird mittels der Steuerung ein Offset aufgeschlagen, der im Normalfall gleich Null ist. Wenn eine Pointeraktion auftritt, die mit einer Stopfaktion gekoppelt ist, wird mittels der Steuerung der Offset auf 7 gesetzt (Inkrementierung um 7 Bits) und nach jeweils N SONET-Rahmen der Offset um 1 dekrementiert (Dekrementierung um 1 Bit) bis der Offset gleich Null ist.

Der Erfindung liegt die Aufgabe zugrunde, eine Schaltungsanordnung mit den eingangs genannten Merkmalen anzugeben, bei der der Jitter im Takt für den Lesezähler weitgehend vermieden wird.

Diese Aufgabe wird dadurch gelöst, daß der Vergleicher zum Vergleichen der Zählerstände des Lesezählers und eines Ausgleichszählers vorgesehen ist, daß zur Steuerung des Ausgleichszählers Mittel vorgesehen sind, die zur gleichmäßigen Verteilung von Anhaltezeitpunkten für den Ausgleichszähler bestimmt sind.

Bei der erfindungsgemäßen Schaltungsanordnung liefert der Schreibzähler weiterhin Schreibadressen an den Pufferspeicher. Der Vergleicher erhält statt der Zählerstände des Schreibzählers die Zählerstände des Ausgleichszähler. Der Vergleicher vergleicht also die Zählerstände von Lese- und Ausgleichszähler. Die Anhaltezeitpunkte sind so verteilt, daß der Ausgleichszähler gleichmäßiger läuft als der Schreibzähler. Somit wird ein Jitter im Takt für den Lesezähler weitgehend vermieden.

In einer Weiterbildung ist vorgesehen, daß die Mittel zur Steuerung des Ausgleichszählers zur gleichmäßigen Verteilung von auf variablen Stopfbytes beruhenden Anhaltezeitpunkten über mehrere Rahmen und zur gleichmäßigen Verteilung von anderen Anhaltezeitpunkten jeweils über die Zeilen eines Rahmens vorgesehen sind.

Ein Rahmenzähler ist bei bestimmten Zählerständen zur Abgabe von Impulsen von der Länge eines Bits vorgesehen. Hierdurch werden der Schreib- und Ausgleichszähler angehalten.

Zur Verteilung der Bits der variablen Stopfbytes ist ein Vorwärts-Rückwärts-Zähler bestimmt, der
- bei Auftreten von variablen Stopfbytes zum Setzen von Zähleinheiten, welche die Anzahl der zu stopfenden Bits angeben,
- zum Verstellen seines Zählerstandes nach einer bestimmten Anzahl von Rahmen und
- bei einem von Null abweichenden Zählerstand zur Abgabe von einem den Ausgleichszähler beeinflussenden Impuls vorgesehen ist.

Eine vorteilhafte Ausgestaltung zur Vermeidung von Störungen besteht darin, daß Mittel zur Synchronisierung des Ausgleichszählers zu bestimmten Zeitpunkten mit dem Schreibzähler vorgesehen sind. Der Ausgleichszähler ist zur Übernahme des Zählerstandes des Schreibzählers vorgesehen, wenn der Zählerstand des Vorwärts-Rückwärts-Zählers Null ist und der Anfang einer Zeile des Rahmens vorliegt.

Anhand der Figuren und eines Ausführungsbeispiels soll die Erfindung näher erläutert werden.

Es zeigen:
Figur 1 eine schematische Darstellung der Rahmenstruktur eines Synchronen Transport Moduls-1 (STM-1) und
Figur 2 eine Schaltungsanordnung zur Taktanpassung mit Schaltungsmerkmalen nach der Erfindung.

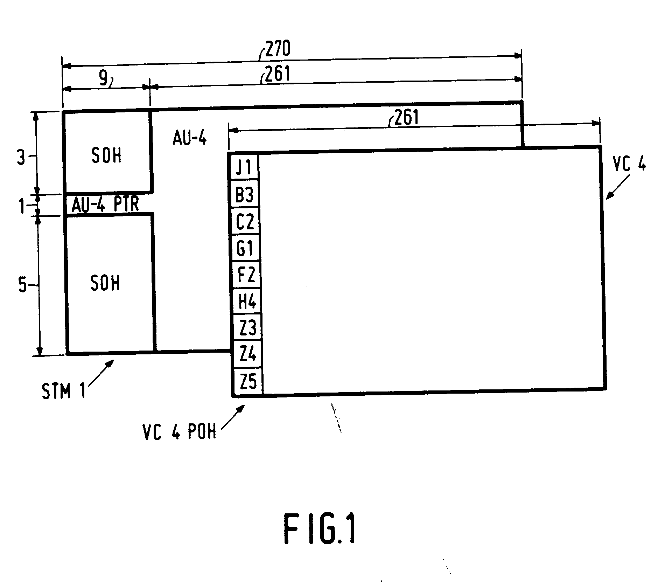

In der schematischen Darstellung eines STM-1-Rahmens nach Figur 1 ist die gesamte binäre Information des Rahmens in Zeilen unterteilt. Der Rahmen besteht aus neun Zeilen, wie die Summe der links in Figur 1 stehenden Zahlen zu verstehen gibt. Jede Zeile enthält 270 Bytes, angedeutet durch die oberste Zahl in Figur 1. Der gesamte Rahmen gliedert sich in drei Bereiche (wegen Details vgl. zum Beispiel die CCITT-Empfehlungen G.707, G.708, G.709, Blaubuch Genf 1988).

Der erste Bereich besteht aus der eigentlichen Nutzinformation, verpackt in einem virtuellen Container VC4, der in Figur 1 ebenfalls zeilenweise dargestellt ist. Jede Zeile des virtuellen Containers VC4 besteht aus 261 Bytes; jede der Zeilen wird durch eine ein Byte lange Steuerinformation J1, B3, C2...Z5 angeführt. Die restlichen Bytes des Containers VC4 bestehen aus 18 festen Stopfbytes, einem Sonderbyte, das sechs Nutzbits, ein festes und ein variables Stopfbit enthält, und 241 Nutzbytes. Die Stopfinformation für die variablen Bits sind in fünf der festen Stopfbytes enthalten.

Der zweite Bereich des Rahmens ist der Overhead-Bereich SOH, der die ersten neun Bytes bestimmter Rahmenzeilen ausfüllt. Dieser Bereich enthält Bytes, die unter anderem der Rahmensynchronisation, der Fehlerüberwachung und dem Netzmanagement dienen.

Der dritte Bereich ist der Pointer-Bereich PTR der administrativen Einheit AU-4. Hier befinden sich unter anderem Bytes, die die Lage des virtuellen Containers VC4 innerhalb eines Rahmens angeben. Diese Lage ist nicht festgelegt und auch nicht an die Rahmenstruktur gebunden, d.h., der Container kann in einem Rahmen beginnen und in einem zweiten enden. Außerdem sind in der Pointer-Zeile Platz für sechs Bytes vorgesehen, die der Taktanpassung dienen und in Ausnahmefällen entweder alle mit bedeutungslosen Füllbytes (positives Bytestopfen) oder alle mit zusätzlichen Nutzinformationsbytes (negatives Bytestopfen) besetzt werden. Die Regel ist der Fall, in dem drei mit Stopfbits und drei mit Informationsbits besetzte Bytes vorliegen. Die Stopfinformation für dieses variable Bytestopfen ist auch im Pointer-Bereich enthalten.

Die gesamte Rahmendauer beträgt 125 µs; das entspricht einer Übertragungsrate von 155,52 Mbit/s.

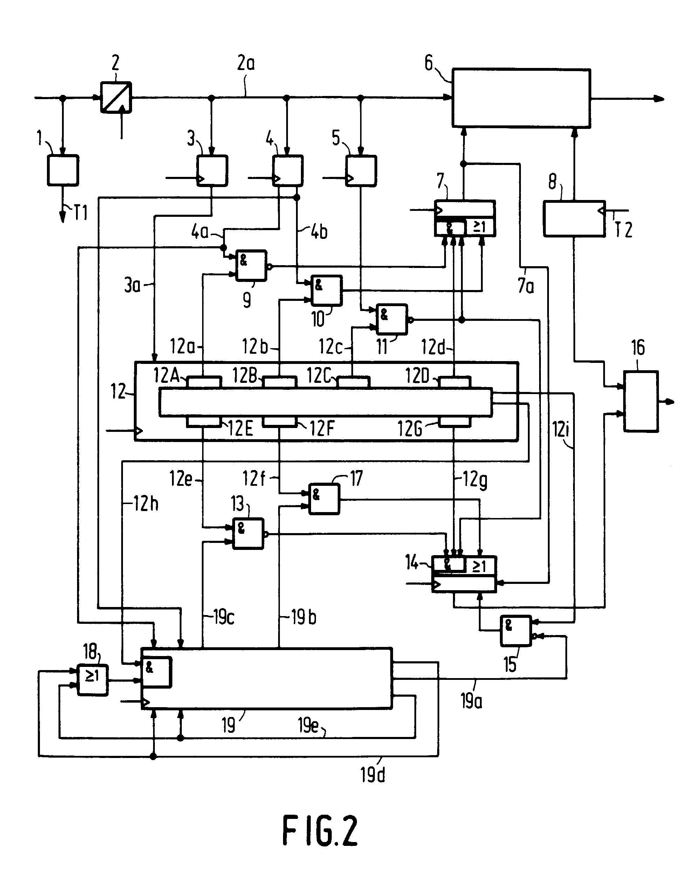

Hauptbestandteile der Schaltung nach Figur 2 sind ein Pufferspeicher 6, ein Schreibzähler 7, ein Lesezähler 8, ein Rahmenzähler 12 und ein Ausgleichszähler 14. Der Stand des Ausgleichszählers 14 und der Stand des Lesezählers 8 werden von einem Vergleicher 16 miteinander verglichen, dessen Ausgangssignal die Regelabweichung eines nicht gezeigten Phasenregelkreises angibt. Dieser Phasenregelkreis erzeugt den Lesetakt T2 für den Lesezähler 8, mit dem die Bits aus dem Pufferspeicher 6 ausgelesen werden. Die nominelle Taktfrequenz des Taktes T2 beträgt 139,264 MHz.

Eine Veränderung dieses Taktes ist an zwei Bedingungen geknüpft, nämlich an die, daß während des gesamten Betriebes der Schaltungsanordnung der Abstand zwischen Schreib- und Leseadressen möglichst einem vorgegebenen Abstand gleicht und an die, daß die Abweichung des Lesetaktes T2 von 139,264 MHz innerhalb vorgeschriebener Grenzen bleibt (±15 ppm). Wie erfindungsgemäß diese beiden Bedingungen gleichzeitig erfüllt werden, soll nun im einzelnen erläutert werden.

Ein nach STM-1-Rahmen strukturiertes Eingangssignal wird einer Taktrückgewinnung 1 und einer Empfangsschnittstelle 2 zugeführt. Die Empfangsschnittstelle 2 erzeugt aus dem CMI-codierten ein binär codiertes Eingangssignal und die Taktrückgewinnung erzeugt den für das Binärsignal notwendigen Bittakt T1. Alle taktgebundenen Bausteine der Schaltung nach Figur 2 werden mit diesem Bittakt T1 getaktet, sofern nicht ausdrücklich etwas anderes angegeben ist.

Ein Vergleicher 3 überträgt über eine Leitung 3a einen Impuls an den Setzeingang des Rahmenzählers 12, sobald das Rahmenkennungswort im Signal auf einer Leitung 2a aufgetreten ist.

Der Rahmenzähler 12 zählt sämtliche Bits eines Rahmens und gibt beim Durchlaufen vorbestimmter Zählerstände an seinen Ausgängen 12a bis 12f Impulse von der Länge eines Bits ab. Vergleichsschaltungen, mit denen derartige Impulse erzeugt werden, sind mit den Bezugszeichen 12A bis 12G versehen. Ihr innerer Aufbau liegt für den Fachmann auf der Hand, sobald er Funktionsangaben erhält. Dies gilt auch für alle anderen Bausteine, die lediglich durch ihre Wirkungsweise charakterisiert werden.

Eine Erkennungsschaltung 4 wertet die im Pointerbereich enthaltene Stopfinformation für Bytes aus. Diese Information gibt an, daß an einer später folgenden und festgelegten Stelle des Rahmens ein Byte auf der Senderseite positiv oder negativ gestopft worden ist. Ist er entgegen der Regel positiv gestopft worden, wird auf der Leitung 4a für die Dauer eines Rahmens eine logische Eins abgegeben, die ein NAND-Gatter 9 derart beeinflußt, daß sein Ausgang auf logisch Null geht, wenn die Vergleichsschaltung 12a feststellt, daß der Rahmenzähler gerade die Bits zählt, die zu dem gestopften Byte gehören.

Mit dem Ausgangssignal des NAND-Gatters 9 wird der Schreibzähler 7 angehalten, so daß die gestopften Bytes nicht in den Pufferspeicher 6 mit eingeschrieben werden.

Ist entgegen der Regel negativ gestopft worden, enthalten also die dafür vorgesehenen Bytes Nutzinformationen, so muß der Schreibzähler 7 weiterlaufen, damit auch diese Bits in den Pufferspeicher 6 eingeschrieben werden. In diesem Falle gibt die Erkennungsschaltung 4 auf einem Ausgang 4b eine logische Eins ab, die zusammen mit einem UND-Gatter 10, der Vergleichsschaltung 12B und der im Schreibzähler enthaltenen Logik dafür sorgt, daß er bedingungslos weiterläuft. Die Logik im Schreibzähler 7 besteht aus einem UND-Gatter mit drei Eingängen, einem ODER-Gatter mit zwei Eingängen, dessen einer Eingang mit dem Ausgang des UND-Gatters 10 verbunden ist, während der andere Eingang mit dem Ausgang des im Schreibzähler 7 enthaltenen UND-Gatters verbunden ist.

Da in einem STM-1-Rahmen auch einzelne Stopfbitstellen vorgesehen sind, die mit Nutzinformationen oder einem Füllbit besetzt sein können, ist eine zweite Erkennungsschaltung 5 vorgesehen, die die Stopfinformation für diese einzelnen Bits auswertet. Ist gestopft worden, gibt die Erkennungsschaltung 5 eine Zeile lang eine logische Dauereins an einen Eingang eines NAND-Gatters 11 ab, dessen anderer Eingang über eine Leitung 12c mit dem Ausgang einer Vergleichsschaltung 12C verbunden ist. Die Vergleichsschaltung 12C gibt einen Impuls ab, wenn der Rahmenzähler die Stelle des Stopfbits erreicht hat. Dieser Impuls setzt den Ausgang des NAND-Gatters 11 auf logisch Null und hält damit - wegen der Verbindung mit dem UND-Gatter des Schreibzählers 7 - den Schreibzähler 7 für einen Takt lang an. Ist nicht gestopft worden, läuft der Schreibzähler 7 an der Stopfbitstelle weiter.

Alle Bits oder Bytes, die zum Overhead-Bereich oder Pointer-Bereich gehören und niemals Nutzinformationen enthalten, werden ebenfalls nicht in den Pufferspeicher 6 eingelesen. Über eine Vergleichsschaltung 12D und eine Leitung 12d, die zu einem Eingang des im Schreibzähler 7 enthaltenen UND-Gatters führt, wird der Schreibzähler 7 an den entsprechenden Stellen angehalten. An Stellen, die in der Regel keine Nutzinformation enthalten, wird der Schreibzähler durch die Vergleichsschaltung 12d ebenfalls angehalten, wenn nicht das Weiterlaufen Vorrang hat (vergleiche weiter oben).

Der Lauf des Ausgleichszählers 14 wird durch die Vergleichsschaltungen 12E, 12F und 12G durch den Vorwärts-Rückwärts-Zähler 19 mit Gattern 13, 15, 17 und 18 sowie durch das Gatter 11 so gesteuert, daß er für ebensoviele Takte pro Zeile angehalten wird wie der Schreibzähler 7, jedoch mit dem Unterschied, daß diese Anhaltezeitpunkte möglichst gleichmäßig über die Zeilen des Rahmens verteilt sind. Daher wird - ohne Berücksichtigung der variablen Stopfbytes - der Ausgleichszähler 14 am Ende einer Zeile den gleichen Stand haben wie der Schreibzähler 7, wenn sie - wie im vorliegenden Beispiel - zu Beginn einer Zeile über eine Leitung 7a synchronisiert werden.

Das Gegenstück zur Vergleichsschaltung 12D ist die Vergleichsschaltung 12G, die den Ausgleichszähler 14 ebensooft anhält wie die Schaltung 12D den Zähler 7, nämlich 225 Bittakte pro Zeile (eine Zeile besteht aus 2160 Bittakten). Dies entspricht der Anzahl der Bits pro Zeile, die in der Regel keine Nutzinformationsbits sind. Ausnahmen von der Regel treten ein, wenn byteweise negativ oder positiv gestopft worden ist. Auf diese Ausnahme wird weiter unten eingegangen.

Die von der Vergleichsschaltung 12G vorgesehenen Anhaltezeitpunkte sind relativ gleichmäßig über eine Zeile verteilt, jedoch müssen solche Zeitpunkte vermieden werden, die gleichzeitig Anhaltezeitpunkte wegen variabler Stopfbits werden können.

Zusätzlich wird der Ausgleichszähler 14 zu den gleichen Zeitpunkten angehalten, zu denen auch der Schreibzähler 7 wegen einzelner Stopfbits angehalten wird, wie eine Verbindung vom Ausgang des NAND-Gatters 11 mit einer Leitung 11a zur einem Eingang eines UND-Gatters des Ausgleichszählers 14 zeigt (der Ausgleichzähler 14 verfügt über eine gleiche innere Logik wie der Lesezähler 7).

Um den unregelmäßigen Lauf des Schreibzählers 7 auszugleichen, der auf den variablen Stopfbytes beruht, ist der Vorwärts-Rückwärts-Zähler 19 vorgesehen, der über Leitungen 4a und 4b gesetzt wird. Sind drei Bytes positiv gestopft worden, wird der Vorwärts-Rückwärts-Zähler 19 durch ein Signal auf der Leitung 4a um 24 (3 × 8) Zähleinheiten heraufgesetzt, bei negativem Stopfen um 24 Einheiten durch ein Signal auf der Leitung 4b herabgesetzt.

Damit ist im Vorwärts-Rückwärts-Zähler 19 die Zahl der Taktimpulse abgespeichert, um die der Ausgleichszähler 14 zusätzlich angehalten werden muß (bei positivem Zählerstand des Zählers 19) oder entgegen der Regel weiterlaufen muß (bei negativem Stand des Zählers 19). Steht der Vorwärts-Rückwärts-Zähler 19 auf Null, sind keine zusätzlichen Änderungen des Laufs des Ausgleichszählers 14 erforderlich.

Über eine Leitung 12h gibt der Rahmenzähler 12 für jeden Rahmen einen Impuls (logische Eins) an einen Eingang eines internen UND-Gatters des Vorwärts-Rückwärts-Zählers 19 ab. Eine logische Eins am Ausgang dieses Gatters ermöglicht das Zählen des Zählers 19 durch die Takte an seinem Takteingang. Der zweite Eingang dieses internen UND-Gatters ist mit dem Eingang eines ODER-Gatters 18 verbunden, dessen zwei Eingänge jeweils über eine der Leitungen 19d und 19e mit den Ausgängen einer internen Logik des Vorwärts-Rückwärts-Zählers 19 verbunden sind. Über die Leitung 19d wird eine logische Eins übertragen, solange der Stand des Vorwärts-Rückwärts-Zählers 19 größer als Null ist und über die Leitung 19e, solange sein Stand kleiner als Null ist. In allen anderen Fällen wird eine logische Null übertragen.

Zusätzlich sind die Leitungen 19d und 19e mit den Eingängen des Vorwärts-Rückwärts-Zählers 19 verbunden, die die Zählrichtung festlegen. Ist der Zählerstand positiv, wird abwärts gezählt, ist er negativ wird aufwärts gezählt. Beim Zählerstand Null wird nicht gezählt.

Das eigentliche Zählwerk des Vorwärts-Rückwärts-Zählers 19 - von diesem war bisher die Rede - wird nur alle 128 Rahmenimpulse einmal verstellt. Daher enthält der Vorwärts-Rückwärts-Zähler 19 auch die für diese Untersetzung notwendigen Register.

Zur Steuerung des Ausgleichszählers 14 gibt der Vorwärts-Rückwärts-Zähler 19 je nach Stand seines Zählwerkes alle 128 Rahmen für die Dauer eines Rahmens eine logische Eins auf einer seiner Ausgangsleitungen 19b oder 19c ab. Auf der Leitung 19b wird eine logische Eins abgegeben, wenn der Stand negativ ist und auf der Leitung 19c, wenn der Stand positiv ist. Über die an diese Leitung angeschlossenen Gatter 13 und 17 wird dann der Lauf des Ausgleichszählers in entsprechender Weise beeinflußt, wie das beim Schreibzähler 7 der Fall ist. An welcher Stelle des Rahmens der Ausgleichszähler 14 weiterläuft oder angehalten wird, ist durch die Vergleichsschaltungen 12E und 12F festgelegt.

Der Ausgleich eines unregelmäßigen Laufs der Schreibzählers 7, dessen Ursachen zum Beispiel drei gestopfte Bytes sind, ist nach etwa 3 000 Rahmen erfolgt. Solange dieser Ausgleich noch nicht stattgefunden hat, darf der Ausgleichszähler 14 nicht mit dem Schreibzähler 7 synchronisiert werden. Zur Einhaltung dieser Bedingung ist eine Leitung 19a, eine Leitung 12i sowie ein UND-Gatter 15 vorgesehen. Auf der Leitung 19a wird eine logische Eins übertragen, wenn der Stand des Vorwärts-Rückwärts-Zählers 19 Null ist, andernfalls eine logische Null. Über die Leitung 12i wird dann eine logische Eins übertragen, wenn der Rahmenzähler auf einem Zeilenanfang steht. Liegt auf der Leitung 19a eine logische Null und steht der Rahmenzähler auf einem Zeilenanfang, so ist die Synchronisation erlaubt und der Stand des Schreibzählers 7 wird über die Leitung 7a vom Ausgleichszähler 14 übernommen.

## Patentansprüche

1. Schaltungsanordnung zur Bitratenanpassung zweier Signale mit einem Pufferspeicher (6) zur Einschreibung von Nutzdaten eines nach Rahmen strukturierten ersten Signals und zur Auslesung der Nutzdaten,
mit einem Schreib- und Lesezähler (7, 8) zur Lieferung von Zählerständen als Schreib- und Leseadressen und mit einem Vergleicher (16) zum Vergleichen von Zählerständen, dessen eines eine Regelabweichung eines Phasenregelkreises darstellendes Ausgangssignal zur Erzeugung eines Lesetaktes für den Lesezähler dient,
dadurch gekennzeichnet,
daß der Vergleicher (16) zum Vergleichen der Zählerstände des Lesezählers (8) und eines Ausgleichszählers (14) vorgesehen ist,
daß zur Steuerung des Ausgleichszählers (14) Mittel (12, 12E, 12F, 12G, 13, 17, 18, 19) vorgesehen sind, die zur gleichmäßigen Verteilung von Anhaltezeitpunkten für den Ausgleichszähler (14) bestimmt sind.

2. Schaltungsanordnung nach Anspruch 1,
dadurch gekennzeichnet,
daß die Mittel (12, 12E, 12F, 12G, 13, 17, 18, 19) zur Steuerung des Ausgleichszählers (14) zur gleichmäßigen Verteilung von auf variablen Stopfbytes beruhenden Anhaltezeitpunkten über mehrere Rahmen und zur gleichmäßigen Verteilung von anderen Anhaltezeitpunkten jeweils über die Zeilen eines Rahmens vorgesehen sind.

3. Schaltungsanordnung nach Anspruch 2,
dadurch gekennzeichnet,
daß ein Rahmenzähler (12) bei bestimmten Zählerständen zur Abgabe von Impulsen von der Länge eines Bits zum Anhalten des Schreib- und Ausgleichszählers (7, 14) vorgesehen ist.

4. Schaltungsanordnung nach Anspruch 3,
dadurch gekennzeichnet,
daß ein Vorwärts-Rückwärts-Zähler (19)
- bei Auftreten von variablen Stopfbytes zum Setzen von Zähleinheiten, welche die Anzahl der zu stopfenden Bits angeben,
- zum Verstellen seines Zählerstandes nach einer bestimmten Anzahl von Rahmen und
- bei einem von Null abweichenden Zählerstand zur Abgabe von einem den Ausgleichszähler (14) beeinflussenden Impuls vorgesehen ist.

5. Schaltungsanordnung nach Anspruch 4,
dadurch gekennzeichnet,
daß mittel (12, 15, 19) zur Synchronisierung des Ausgleichszählers (14) zu bestimmten Zeitpunkten mit dem Schreibzähler (7) vorgesehen sind.

6. Schaltungsanordnung nach Anspruch 5,
dadurch gekennzeichnet,
daß der Ausgleichszähler (14) zur Übernahme des Zählerstandes des Schreibzählers (7) vorgesehen ist, wenn der Zählerstand des Vorwärts-Rückwärts-Zählers (19) Null ist und der Anfang einer Zeile des Rahmens vorliegt.

## Claims

1. Circuit arrangement for adapting the bit rates of two signals to each other, which arrangement comprises a buffer store (6) in which the payload data of a frame-structured first signal are written as write addresses with the aid of a write address counter (7) and are read out again as read addresses with the aid of a read address counter (8), and further includes a comparator (16) for comparing the counts, whose comparator output signal representing a control error of a phase-locked loop is used for generating a read clock for the read counter, characterized in that the comparator (16) compares the counts of the read counter (8) and a balancing counter (14), in that means (12, 12E, 12F, 12G, 13, 17, 18, 19) for controlling the balancing counter (14) control the uniform spreading of stops for the balancing counter (14).

2. Circuit arrangement as claimed in Claim 1, characterized in that the means (12, 12E, 12F, 12G, 13, 17, 18, 19) for controlling the balancing counter (14) control the uniform spreading of stops which are based on variable stuff bytes over a plurality of frames and uniformly spread other stops over the rows of a frame.

3. Circuit arrangement as claimed in Claim 2, characterized in that at specific counts a frame counter (12) produces pulses of one bit in length to stop the write and balancing counters (7, 14).

4. Circuit arrangement as claimed in Claim 3, characterized in that an up/down counter (19) is provided which:
- at the occurrence of variable stuff bytes, sets counting units which indicate the number of bits to be stuffed,
- resets its counts after a specific number of frames, and
- produces a pulse which affects the balancing counter (14) if the count differs from zero.

5. Circuit arrangement as claimed in Claim 4, characterized in that synchronizing means (12, 15, 19) synchronize the balancing counter (14) with the write counter (7) at specific instants.

6. Circuit arrangement as claimed in Claim 5, characterized in that the balancing counter (14) copies the count of the write counter (7) when the count of the up/down counter (19) is zero and the beginning of a row occurs.

## Revendications

1. Circuit d'adaptation du débit binaire de deux signaux avec une mémoire tampon (6) pour l'enregistrement de données utiles d'un premier signal structuré en trames et pour la lecture des données utiles,
avec un compteur d'écriture et de lecture (7, 8) pour la production d'états de compteur en tant qu'adresses d'écriture et de lecture et avec un comparateur (16) pour comparer les états de compteur dont un signal de sortie représentant un écart de réglage d'un circuit de réglage de phase sert à la production d'une cadence de lecture pour le compteur de lecture,
caractérisé en ce
que le comparateur (16) est prévu pour la comparaison des états du compteur de lecture (8) et d'un compteur de compensation (14),
que, pour la commande du compteur de compensation (14), sont prévus des moyens (12, 12E, 12F, 12G, 13, 17, 18, 19) qui sont déterminés pour la répartition régulière des moments d'arrêt pour le compteur de compensation (14).

2. Circuit selon la revendication 1,
caractérisé en ce
que les moyens (12, 12E, 12F, 12G, 13, 17, 18, 19) sont prévus pour la répartition régulière des moments d'arrêt reposant sur des octets de remplissage variables sur plusieurs trames et pour la répartition régulière d'autres moments d'arrêt respectivement sur les lignes d'une trame.

3. Circuit selon la revendication 2,
caractérisé en ce
qu'un compteur de trames (12) est prévu, pour des états déterminés du compteur, pour la délivrance d'impulsions de la longueur d'un bit en vue d'arrêter les compteurs d'écriture et de compensation (7, 14).

4. Circuit selon la revendication 3,
caractérisé en ce
qu'un compteur-décompteur (19) est prévu
- pour régler, en la présence d'octets de remplissage variables, les unités de comptage qui indiquent le nombre de bits de remplissage;
- pour régler son état de compteur après un nombre déterminé de trames, et
- en cas d'état du compteur différent de zéro, pour délivrer une impulsion influençant le compteur de compensation (14).

5. Circuit selon la revendication 4,
caractérisé en ce
que des moyens (12, 15, 19) sont prévus pour la synchronisation du compteur de compensation (14) à des moments déterminés avec le compteur d'écriture (7).

6. Circuit selon la revendication 5,
caractérisé en ce
que le compteur de compensation (14) est prévu pour la prise en charge de l'état du compteur d'écriture (7) lorsque l'état du compteur-décompteur (19) est égal à zéro et que le début d'une ligne de la trame est arrivé.
